# EUROPÄISCHE PATENTSCHRIFT

(11) **EP 3 132 890 B1**
(45) Veröffentlichungstag und Bekanntmachung des Hinweises auf die Patenterteilung: **10.10.2018**
(21) Anmeldenummer: 15181673.3
(22) Anmeldetag: 20.08.2015
(51) Int. Cl.: B23Q 11/00

(54) **SAUGMODUL UND STEUERUNGSVERFAHREN**
SUCTION MODULE AND CONTROL METHOD
MODULE D'ASPIRATION ET PROCEDE DE COMMANDE

(43) Veröffentlichungstag der Anmeldung: 22.02.2017
(73) Patentinhaber: HILTI Aktiengesellschaft, 9494 Schaan (LI)
(72) Erfinder: Wahle, Quirin, 80634 München (DE); Königbauer, Egon, 82223 Eichenau (DE); Appel, Hans, 81377 Muenchen (DE)
(74) Vertreter: Hilti Aktiengesellschaft Corporate Intellectual Property

(56) Entgegenhaltungen:
- EP-A1- 2 789 283
- GB-A- 2 426 221

## Beschreibung

### GEBIET DER ERFINDUNG

Die vorliegende Erfindung betrifft ein Saugmodul für eine bohrende Handwerkzeugmaschine wie z.B aus der GB 2 426 221 A bekannt.

Ein Saugmodul ist aus der EP 2599584 A1 bekannt. Das Saugmodul hat einen Sammelbehälter für Staub und ein motorgetriebenes Lüfterrad, welches staubbeladene Luft von einem Ansaugstutzen zu dem Sammelbehälter fördert.

### OFFENBARUNG DER ERFINDUNG

Das erfindungsgemäße Saugmodul für eine bohrende Handwerkzeugmaschine hat einen eine Arbeitsachse umschließenden ringförmigen Ansaugstutzen, eine mit dem Ansaugstutzen in Verbindung stehenden Ansaugkanal zum Ansaugen von staubbeladener Luft, einen in dem Ansaugkanal angeordneten Drucksensor zum Erfassen eines Drucks, einen Sammelbehälter zum Sammeln von Staub, ein Lüfterrad zum Erzeugen eines Luftstroms zum Ansaugen der staubbeladenen Luft und einen Elektromotor zum Antreiben des Lüfterrads. Eine Drehzahlregelung ist vorgesehen, die ansprechend auf den Druck eine Drehzahl des Elektromotors zum Einstellen eines Solldrucks in dem Ansaugkanal regelt. Der geregelte Druck gewährleistet ein sicheres Arbeiten mit den für das Saugmodul vorgesehenen Hohlbohrern bei einer effizienten Nutzung elektrischer Leistung für den Motor.

Die Erfindung sieht einen Neigungssensor vor, der eine Neigung der Arbeitsachse des Saugmoduls gegenüber der Schwerkraft ermittelt. Die Drehzahlregelung regelt bei einer vertikalen Neigung der Arbeitsachse auf einen niedrigeren Solldruck aus als bei einer horizontalen Neigung der Arbeitsachse. Die Anpassung der Solldrehzahl ermöglicht längere Intervalle zwischen dem Leeren des Sammelbehälters, sofern dies die Anwendung und die mit der Anwendung einhergehende Haltung des Saugmoduls und der Handwerkzeugmaschine dies zulässt.

### KURZE BESCHREIBUNG DER FIGUREN

Die nachfolgende Beschreibung erläutert die Erfindung anhand von exemplarischen Ausführungsformen und Figuren. In den Figuren zeigen:

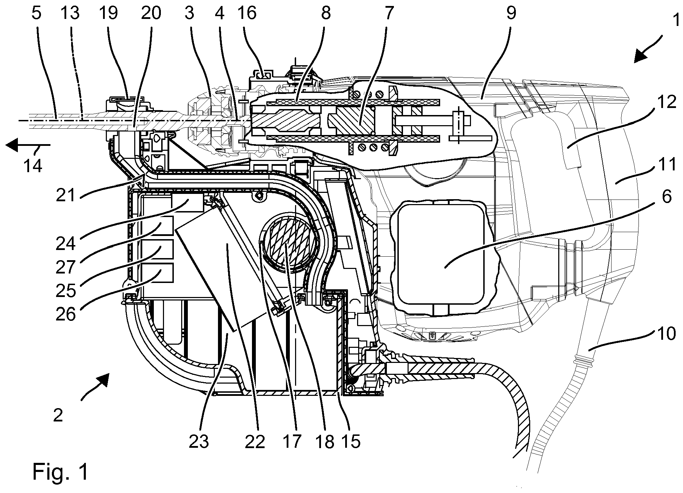

- Fig. 1: einen Bohrhammer mit einem Saugmodul

### AUSFÜHRUNGSFORMEN DER ERFINDUNG

Fig. 1 zeigt einen Bohrhammer **1** mit einem aufgesetzten Saugmodul **2**. Der Bohrhammer **1** hat einen Werkzeughalter **3**, in welchen ein Schaftende **4** eines Werkzeug, z.B. eines des Sbohrers **5**, eingesetzt werden kann. Einen primären Antrieb des Bohrhammers **1** bildet ein Motor **6**, welcher ein pneumatisches Schlagwerk **7** und eine Abtriebswelle **8** antreibt. Der Motor **6**, das pneumatische Schlagwerk **7** und die Abtriebswelle **8** sind in einem Maschinengehäuse **9** angeordnet. Ein Batteriepaket oder eine Netzleitung **10** versorgt den Motor **6** mit Strom. Ein Anwender kann den Bohrhammer **1** mittels eines Handgriffs **11** führen und mittels eines Systemschalters **12** den Bohrhammer **1** in Betrieb nehmen. Im Betrieb dreht der Bohrhammer **1** den Bohrer **5** kontinuierlich um eine Arbeitsachse **13** und kann dabei den Bohrer **5** in Schlagrichtung **14** längs der Arbeitsachse **13** in einen Untergrund schlagen.

Das Saugmodul **2** saugt das von dem Hohlbohrer **5** erzeugte Bohrgut auf. Der Hohlbohrer **5** hat anstelle einer Transportwendel zum Fördern des Bohrguts aus einem Bohrloch einen hohlen Schaft, durch welchen das Bohrgut per Luftstrom angesaugt wird. Der Luftstrom wird durch das Saugmodul **2** erzeugt.

Das Saugmodul **2** hat ein Modulgehäuse **15**, das an dem Maschinengehäuse **9** des Bohrhammers **1** befestigbar ist. Beispielsweise weist das Maschinengehäuse **9** eine Manschette **16** auf, welche über einen Hals nahe dem Werkzeughalter **3** aufgeschoben werden kann. Der Anwender kann das Saugmodul **2** zusammen und mittelbar durch den Bohrhammer **1** führen. Das Saugmodul **2** hat ein Lüfterrad **17**, welches durch einen Elektromotor **18** angetrieben ist. Das Lüfterrad **17** saugt einen Luftstrom an. Der Luftstrom tritt an einem Ansaugstutzen **19** in das Saugmodul **2** ein. Der Ansaugstutzen **19** umschließt ringförmig eine Austrittsöffnung **20** des Hohlbohrers **5**. Die Arbeitsachse **13** des Bohrhammers **1** fällt mit der Arbeitsachse des Saugmoduls **2** zusammen, indem der Ansaugstutzen **19** die Arbeitsachse **13** umschließt. Ein Ansaugkanal **21** führt den Luftstrom von dem Ansaugstutzen **19** zu einem Staubfilter **22** und einem Sammelbehälter **23**. Der in der Luft enthaltene Staub wird an dem Staubfilter **22** abgeschieden und fällt in den Sammelbehälter **23**. Das Lüfterrad **17** befindet sich vorzugsweise stromabwärts von dem Staubfilter **22**, so dass das Lüfterrad **17** nur mit staubfreier oder zumindest staubarmer Luft in Kontakt kommt. Das Saugmodul **2** hat stromabwärts des Lüfterrads **17** eine Ausblasöffnung.

Der Sammelbehälter **23** füllt sich in fortlaufendem Betrieb mit abgeschiedenem Staub. Der sich füllende Sammelbehälter **23** behindert den Luftstrom, der wenigstens teilweise durch den Sammelbehälter **23** geführt ist. Ferner kann der Staubfilter **22** zunehmend mit Staub bedeckt sein. Bei gleichbleibender Saugleistung des Lüfterrads **17** würde der Druck in dem Ansaugkanal **21** ansteigen, d.h. sich dem Umgebungsdruck annähern. Um einen sicheren Betrieb des Hohlbohrers zu gewährleisten, insbesondere ein Verstopfen des Hohlbohrers zu vermeiden, wird die Saugleistung des Lüfterrads **17** soweit erhöht, bis sich ein Solldruck in dem Ansaugkanal **21** einstellt. Nach dem Entleeren des Sammelbehälters **23** oder Reinigen des Staubfilters **22** wird die Saugleistung reduziert.

Ein Drucksensor **24** bestimmt den Druck in dem Ansaugkanal **21**. Der Drucksensor **24** ist stromaufwärts von dem Sammelbehälter **23** und dem Staubfilter **22** angeordnet. Der Drucksensor **24** bestimmt den aktuellen Druck. Der aktuelle Druck wird als Sollgröße einer Drehzahlregelung **25** des Elektromotors **18** zugeführt. Die Drehzahlregelung **25** passt die Drehzahl des Elektromotors **18** an, bis der Druck in dem Ansaugkanal **21** dem Solldruck entspricht. Falls die Drehzahlregelung **25** den Druck nicht oder nicht innerhalb einer vorgegebenen Zeitspanne einstellen kann, wird ein Warnsignal ausgeben. Das Warnsignal kann beispielsweise dem Anwender mittels einer optischen oder akustischen Warneinrichtung **26** angezeigt werden. Beispielsweise kann der Anwender aufgefordert werden, den Sammelbehälter **23** zu leeren und den Staubfilter **22** zu reinigen.

Das Saugmodul **2** kann mit einem Neigungssensor **27** ausgestattet sein. Der Neigungssensor **27** ermittelt die Neigung der Arbeitsachse **13** zu der Schwerkraft. Bei einer Neigung von 90°, also horizontaler Ausrichtung, der Arbeitsachse **13**, kann das Lüfterrad **17** mit einer moderaten Saugleistung betrieben werden, um den Staub aus der Hohlbohrer zu entfernen. Beispielsweise ist ein Druckunterschied von 8 mBar in dem Ansaugkanal **21** gegenüber der Umgebung ausreichend. Bei einer geringen Neigung, also wenn der Anwender beispielsweise über Kopf senkrecht in eine Decke bohrt oder gleichermaßen wenn der Anwender in den Boden bohrt, ist überraschend eine größere Saugleistung sinnvoll. Der Druckunterschied sollte wenigstens um 50 % größer, vorzugsweise bis zu 100 % größer verglichen zu der horizontalen Anwendung sein, z.B. 14 mBar.

Die von dem Neigungssensor **27** ermittelte Neigung wird der Drehzahlregelung **25** zugeführt. Die Drehzahlregelung **25** passt den Solldruck an die Neigung an. Bei einer geringen Neigung wird ein geringerer Solldruck, d.h. größerer Druckunterschied zu der Umgebung, eingestellt als bei einer größeren Neigung. Die Anpassung des Solldrucks kann schrittweise oder kontinuierlich an die Neigung angepasst werden. Im Ergebnis gibt das Saugmodul **2** bei einer vertikalen Anwendung bereits bei einem geringen Füllgrad des Sammelbehälters **23** ein Warnsignal verglichen zu einer horizontalen Anwendung aus.

## Patentansprüche

1. Saugmodul (2) für eine bohrende Handwerkzeugmaschine (1) mit
einem eine Arbeitsachse (13) umschließenden ringförmigen Ansaugstutzen (19),
einem mit dem Ansaugstutzen (19) in Verbindung stehenden Ansaugkanal (21) zum Ansaugen von staubbeladener Luft,
einem in dem Ansaugkanal (21) angeordneten Drucksensor (24) zum Erfassen eines Drucks,
einem Sammelbehälter (23) zum Sammeln von Staub,
einem Lüfterrad (17) zum Erzeugen eines Luftstroms zum Ansaugen der staubbeladenen Luft,
einem Elektromotor (18) zum Antreiben des Lüfterrads (17) und
einer Drehzahlregelung (25), die ansprechend auf den Druck eine Drehzahl des Elektromotors (18) zum Einstellen eines Solldrucks in dem Ansaugkanal (21) regelt, einem Neigungssensor (27), der eine Neigung der Arbeitsachse (13) des Saugmoduls (2) gegenüber der Schwerkraft ermittelt, und wobei die Drehzahlregelung (25) bei einer vertikalen Neigung der Arbeitsachse (13) einen niedrigeren Solldruck ausregelt als bei einer horizontalen Neigung der Arbeitsachse (13).

2. Saugmodul (2) nach Anspruch 1, **dadurch gekennzeichnet, dass** ein Staubfilter (22) zwischen dem Lüfterrad (17) und dem Sammelbehälter (23) angeordnet ist.

3. Steuerungsverfahren für ein Saugmodul nach einem der Ansprüche 1 bis 2 mit den Schritten:
Erfassen eines Drucks in dem Ansaugkanal (21) des Saugmoduls (2),
Regeln einer Drehzahl eines motorgetriebenen Lüfterrads (17) ansprechend auf den Druck zum Einstellen eines Solldrucks in dem Ansaugkanal (21) mit den weiteren Schritten:
Bestimmen einer Neigung der Arbeitsachse (13) des Saugmoduls (2) gegenüber der Schwerkraft,
Einstellen des Solldrucks auf einen ersten Wert bei einer ersten Neigung und auf einen zweiten Wert bei einer zweiten Neigung, wobei die erste Neigung größer als die zweite Neigung und der erste Wert geringer als der zweite Wert ist.

4. Steuerungsverfahren nach Anspruch 3, **dadurch gekennzeichnet, dass** eine Warneinrichtung (26) ein Warnsignal ausgibt, wenn der Solldruck nicht erreicht wird.

## Claims

1. Intake module (2) for a boring hand machine tool (1) with
a ring-shaped intake socket (19) surrounding a working axis (13),
an intake duct (21) connected to the intake socket (19) for taking in dust-laden air,
a pressure sensor (24) arranged in the intake duct (21) for detecting pressure,
a collecting container (23) for collecting dust,
a fan wheel (17) for producing a stream of air for taking in the dust-laden air,
an electric motor (18) for driving the fan wheel (17) and
a speed control (25), which in response to the pressure controls a speed of the electric motor (18) for setting a target pressure in the intake duct (21),
an inclination sensor (27), which establishes an inclination of the working axis (13) of the intake module (2) in comparison with gravity and in which the speed control (25) sets a lower target pressure in the case of a vertical inclination of the working axis (13) than in the case of a horizontal inclination of the working axis (13).

2. Intake module (2) according to claim 1, **characterised in that** a dust filter (22) is arranged between the fan wheel (17) and the collecting container (23).

3. Control method for an intake module according to one of claims 1 to 2 with the steps:
detecting a pressure in the intake duct (21) of the intake module (2),
controlling a speed of a motor-driven fan wheel (17) in response to the pressure for setting a target pressure in the intake duct (21) with the further steps:
determining an inclination of the working axis (13) of the intake module (2) in comparison with gravity,
setting the target pressure to a first value in the case of a first inclination and to a second value in the case of a second inclination, in which the first incliation is greater than the second inclination and the first value is smaller than the second value.

4. Control method according to claim 3, **characterised in that** a warning device (26) gives out a warning signal, if the target value is not reached.

## Revendications

1. Module d'aspiration (2) pour une machine-outil manuelle de perçage (1) comportant :
un orifice d'aspiration annulaire (19) entourant un axe de travail (13),
un canal d'aspiration (21) relié à l'orifice d'aspiration (19) pour aspirer de l'air chargé de poussière,
un capteur de pression (24) agencé dans le canal d'aspiration (21) pour détecter une pression,
un réservoir de collecte (23) pour collecter de la poussière,
une roue de ventilateur (17) pour générer un écoulement d'air pour aspirer l'air chargé de poussière,
un moteur électrique (18) pour entraîner la roue de ventilateur (17) et
un dispositif de régulation de vitesse de rotation (25) qui régule une vitesse de rotation du moteur électrique (18) en fonction de la pression afin d'établir une pression de consigne dans le canal d'aspiration (21),
un capteur d'inclinaison (27) qui détermine une inclinaison de l'axe de travail (13) du module d'aspiration (2) par rapport à la force de gravité, et dans lequel, lorsque l'axe de travail (13) est incliné verticalement, le dispositif de régulation de vitesse de rotation (25) établit une valeur de consigne plus faible que lorsque l'axe de travail (13) est incliné horizontalement.

2. Module d'aspiration (2) selon la revendication 1, **caractérisé en ce qu'**un filtre à poussière (22) est agencé entre la roue de ventilateur (17) et le réservoir de collecte (23).

3. Procédé de commande pour un module d'aspiration selon l'une des revendications 1 à 2 comportant les étapes consistant à :
détecter une pression dans le canal d'aspiration (21) du module d'aspiration (2),
réguler une vitesse de rotation d'une roue de ventilateur entraînée par un moteur (17) en fonction de la pression afin de régler une pression de consigne dans le canal d'aspiration (21), comportant les étapes supplémentaires consistant à :
déterminer une inclinaison de l'axe de travail (13) du module d'aspiration (2) par rapport à la force de gravité,
régler la pression de consigne à une première valeur pour une première inclinaison et à une seconde valeur pour une seconde inclinaison, dans lequel la première inclinaison est supérieure à la seconde inclinaison et la première valeur est inférieure à la seconde valeur.

4. Procédé de commande selon la revendication 3, **caractérisé en ce qu'**un dispositif d'alerte (26) émet un signal d'alerte lorsque la pression de consigne n'est pas atteinte.
